# FASCICULE DE BREVET EUROPEEN

(11) **EP 2 984 374 B1**
(45) Date de publication et mention de la délivrance du brevet: **08.02.2017**
(21) Numéro de dépôt: 14722272.3
(22) Date de dépôt: 14.04.2014
(51) Int. Cl.: F16K 31/52, F16K 31/528, F16K 1/22, F16K 11/052

(54) **VANNE, NOTAMMENT DE CONTROLE MOTEUR, DOTEE D'UN VOLET DE DOSAGE ET D'UN VOLET D'AIGUILLAGE**
VENTIL, INSBESONDERE MOTORSTEUERVENTIL, MIT EINEM DOSIERSCHIEBER UND EINEM ABLENKSCHIEBER
VALVE, IN PARTICULAR AN ENGINE CONTROL VALVE, EQUIPPED WITH A METERING GATE AND A DIVERTER GATE

(30) Priorité: 12.04.2013 FR 1353361
(43) Date de publication de la demande: 17.02.2016
(73) Titulaire: Valeo Systèmes de Contrôle Moteur, 95800 Cergy Saint Christophe (FR)
(72) Inventeur: MARTIN, Nicolas, F-78600 Maisons-Laffitte (FR); HODEBOURG, Grégory, F-Sartrouville 78500 (FR); CRAVO, David, F-95520 Osny (FR)
(74) Mandataire: Tran, Chi-Hai
(86) Numéro de dépôt international: PCT/FR2014/050904
(87) Numéro de publication internationale: WO 2014/167266

(56) Documents cités:
- EP-A2- 2 187 032
- US-A- 5 562 085
- US-A1- 2009 188 273

## Description

L'invention se rapporte à une vanne, notamment à une vanne de contrôle moteur, dotée d'un volet de dosage et d'un volet d'aiguillage. Le volet de dosage est généralement apte à pivoter dans une conduite pour faire varier la section de passage des gaz, et le volet d'aiguillage est conçu pour pivoter entre une première position d'obturation d'une première voie et une deuxième position d'obturation d'une deuxième voie. Une telle vanne peut, par exemple, être placée dans une boucle de recirculation des gaz d'échappement (ci-après dénommée « boucle EGR » en référence à l'expression anglaise « *Exhaust Gas Recirculation* ») en aval d'un refroidisseur, le volet de dosage régulant le débit des gaz dans ladite boucle, et le volet d'aiguillage étant apte à obturer, soit une voie d'accès audit refroidisseur, soit un canal de dérivation contournant ce refroidisseur. La vanne peut comprendre un volet de dosage et un volet d'aiguillage pilotés par un mécanisme d'actionnement amélioré desdits volets.

De telles vannes existent et ont déjà fait l'objet de brevets. On peut, par exemple, citer le brevet US2010/0199957 qui décrit une vanne de recirculation des gaz d'échappement placée en amont d'un refroidisseur, ladite vanne possédant un premier volet de dosage destiné à contrôler le débit des gaz dans la boucle EGR et un deuxième volet d'aiguillage placé en aval dudit volet de dosage permettant, soit de faire passer les gaz par le refroidisseur, soit de dévier les gaz dans un canal de dérivation afin de contourner ledit refroidisseur. La principale caractéristique de ladite vanne est qu'elle met en oeuvre un mécanisme d'actionnement qui est commun aux deux volets. Le principal inconvénient engendré par un tel mécanisme est qu'il comprend un nombre important de pièces de forme particulière, interagissant entre elles de façon complexe, multipliant ainsi les risques de mauvais fonctionnement, voire de pannes.

Il existe un besoin pour bénéficier d'une vanne de mettant en oeuvre un volet de dosage et un volet d'aiguillage, aptes à être déplacés par un mécanisme d'actionnement commun, permettant de s'affranchir des inconvénients relevés dans l'état de la technique.

L'invention a pour objet une vanne, notamment de contrôle moteur, comprenant :
- au moins trois voies débouchant dans un espace intérieur commun,
- un volet de dosage apte à pivoter dans une première voie pour faire varier la section de passage d'un fluide dans cette dernière,
- un volet d'aiguillage apte à pivoter entre une position d'obturation d'une deuxième voie et une position d'obturation d'une troisième voie,
- un dispositif d'actionnement commun des volets,
   le dispositif d'actionnement comportant au moins une roue d'actionnement mobile en rotation pour faire pivoter l'un au moins du volet d'aiguillage et du volet de dosage,
   le dispositif d'actionnement présentant au moins une première configuration dans laquelle le volet de dosage est dans une position de d'obturation de la première voie et dans laquelle le volet d'aiguillage est dans une position intermédiaire dans laquelle il n'est ni en position d'obturation de la deuxième voie ni en position d'obturation de la troisième voie, et
   le dispositif d'actionnement étant configuré pour que la rotation de la roue d'actionnement alors que le dispositif d'actionnement est dans la première configuration, conduise :
   - selon une première phase à un pivotement important du volet d'aiguillage alors que le volet de dosage n'est soumis qu'à un faible pivotement, et
   - selon une deuxième phase ultérieure à la première phase au pivotement du volet de dosage pour modifier la section de passage du fluide dans la première voie sans que la position du volet d'aiguillage ne soit modifiée.

La roue d'actionnement peut pivoter, pendant la deuxième phase, dans le même sens de rotation que lors de la première phase qui la précède directement.

Autrement dit, dans une première phase, lorsque le volet d'aiguillage pivote depuis la première configuration vers une position d'obturation, le volet de dosage n'est soumis qu'à un faible pivotement, à partir d'une position de complète fermeture de la première voie. De cette manière, le volet de dosage demeure dans une position de quasi fermeture de la première voie, lorsque le volet d'aiguillage pivote pour atteindre une position d'obturation. Dans une deuxième phase, la roue d'actionnement poursuit alors sa rotation dans le même sens, cette poursuite de la rotation permettant la régulation du fluide dans la première voie sans empêcher que le volet d'aiguillage ne reste dans la position d'obturation qu'il a atteinte.

Le dispositif d'actionnement est configuré pour que la rotation de la roue d'actionnement alors que le dispositif d'actionnement est dans la première configuration, conduise au pivotement du volet de dosage dans un seul et même sens de rotation, indépendamment du sens de rotation de la roue d'actionnement.

Autrement dit, quel que soit le sens de rotation de la roue d'actionnement, à partir de la première configuration, le volet de dosage pivote toujours dans le même sens.

Une telle vanne présente un mécanisme d'étanchéité simplifié pour le volet de dosage. En effet, en tournant dans un seul sens, il n'y a plus qu'un sens de fermeture, et donc une seule étanchéité à gérer.

Une telle vanne n'a recours qu'à une seule roue d'actionnement pour faire pivoter les deux volets.

Préférentiellement, le dispositif d'actionnement peut être configuré pour que la rotation de la roue d'actionnement alors que le dispositif d'actionnement est dans la première configuration conduise :
- dans un premier sens de rotation au pivotement du volet d'aiguillage jusqu'à la position d'obturation de la deuxième voie, et
- dans un deuxième sens de rotation au pivotement du volet d'aiguillage jusqu'à la position d'obturation de la troisième voie.

Au sens de la présente demande, un volet obture une voie lorsqu'il empêche du fluide de parcourir cette voie.

Avantageusement, le dispositif d'actionnement peut être apte à maintenir le volet d'aiguillage dans l'une ou l'autre des positions d'obturation de la deuxième ou troisième voie alors que la roue d'actionnement poursuit un mouvement de rotation unidirectionnel depuis la première configuration.

En d'autres termes, dès lors que le volet d'aiguillage arrive dans une position d'obturation de la deuxième ou troisième voie, la roue d'actionnement peut continuer le mouvement de rotation dans le même sens qu'elle avait pour amener le volet d'aiguillage dans ladite position d'obturation. La poursuite de ce mouvement de rotation n'empêche pas le maintien du volet d'aiguillage en position d'obturation.

Par exemple, en partant de la première configuration et par une rotation de la roue d'actionnement dans un premier sens de rotation, le dispositif d'actionnement peut,
- dans une première phase, permettre de simultanément faire pivoter le volet d'aiguillage jusqu'à une position d'obturation de la deuxième voie et faire pivoter d'une faible amplitude le volet de dosage dans un sens de rotation prédéterminé, et
- dans une deuxième phase ultérieure, et pour le même sens de rotation de la roue d'actionnement que dans la première phase précédente, maintenir le volet d'aiguillage dans la position d'obturation atteinte, et faire pivoter le volet de dosage dans le sens de rotation prédéterminé pour régler la section de passage du fluide dans la première voie.

Dans le même exemple, en partant de la première configuration et par une rotation de la roue d'actionnement dans un deuxième sens de rotation opposé au premier sens, le dispositif d'actionnement peut,
- dans une première phase, permettre de simultanément faire pivoter le volet d'aiguillage jusqu'à une position d'obturation de la troisième voie et faire pivoter d'une faible amplitude le volet de dosage dans le sens de rotation prédéterminé, et
- dans une deuxième phase ultérieure, et pour le même sens de rotation de la roue d'actionnement que dans la première phase précédente, maintenir le volet d'aiguillage dans la position d'obturation atteinte, et faire pivoter le volet de dosage dans le sens de rotation prédéterminé pour régler la section de passage du fluide dans la première voie.

Avantageusement, le dispositif d'actionnement peut comprendre un système d'actionnement du volet d'aiguillage, ledit système d'actionnement comprenant une pièce de guidage et une pièce d'interface, la roue d'actionnement étant rigidement couplée à la pièce de guidage et le volet d'aiguillage étant rigidement couplé à la pièce d'interface, la pièce de guidage coopérant avec la pièce d'interface pour faire pivoter le volet d'aiguillage.

Le dispositif d'actionnement peut comprendre un système d'actionnement du volet de dosage, ledit système d'actionnement comprenant un organe de guidage et une pièce d'interface, la roue d'actionnement étant reliée à l'organe de guidage de manière à faire pivoter celui-ci lors de sa rotation, et la pièce d'interface étant rigidement couplée au volet de dosage, et l'organe de guidage coopérant avec ladite pièce d'interface pour faire pivoter le volet de dosage.

Préférentiellement, l'organe de guidage du système d'actionnement du volet de dosage peut comprendre un premier levier et un deuxième levier articulés en rotation entre eux, via une extrémité commune, le premier levier comprenant une autre extrémité coopérant par un premier point de pivot avec la roue d'actionnement et le deuxième levier comprenant une autre extrémité coopérant par un deuxième point de pivot avec la pièce d'interface du système d'actionnement du volet de dosage. L'effet d'un tel organe de guidage est de jouer le rôle d'un système bielle-manivelle permettant le pivotement du volet de dosage dans le même sens de rotation en partant de sa position d'obturation de la première voie, quel que soit le sens de rotation de la roue d'actionnement.

Le dispositif d'actionnement étant dans la première configuration, les premier et deuxième leviers peuvent être alignés selon leur axe longitudinal.

Le dispositif d'actionnement étant dans la première configuration, l'extrémité commune des premier et deuxième leviers peut être située du côté opposé aux autres extrémités desdits leviers.

Le dispositif d'actionnement étant dans la première configuration, l'extrémité commune des premier et deuxième leviers, le premier point de pivot et le deuxième point de pivot peuvent être alignés.

Préférentiellement, au moins une pièce composant l'organe de guidage, notamment le premier levier, du système d'actionnement du volet de dosage et la pièce de guidage du système d'actionnement du volet d'aiguillage peuvent être distincts et rigidement couplés entre eux.

En variante, au moins une pièce composant l'organe de guidage, notamment le premier levier, du système d'actionnement du volet de dosage et la pièce de guidage du système d'actionnement du volet d'aiguillage peuvent être formés d'une seule et même pièce.

Avantageusement, la roue d'actionnement coopère avec la pièce de guidage du système d'actionnement du volet d'aiguillage par une première zone de ladite roue et la roue d'actionnement est en regard de l'extrémité commune des premier et deuxième leviers de l'organe de guidage du système d'actionnement du volet de dosage par une deuxième zone de ladite roue, différente de la première zone.

Par exemple, la première zone et la deuxième zone peuvent avoir des positions radiales différentes et/ou des positions angulaires différentes, et/ou dans le cas où la roue d'actionnement présente deux faces opposées parallèles, être positionnées sur des faces différentes de ladite roue.

Selon un premier exemple de réalisation, la pièce d'interface du système d'actionnement du volet d'aiguillage peut être configurée pour définir un chemin de guidage de la pièce de guidage avec laquelle elle coopère.

Un tel exemple de réalisation, est décrit en détail dans la demande Française n° 1352230 déposée le 13 mars 2013 par la Demanderesse.

Avantageusement, le chemin de guidage peut être formé par une rainure borgne ménagée dans ladite pièce d'interface, ladite pièce de guidage reposant dans la rainure borgne lorsque le volet d'aiguillage est dans la position intermédiaire.

Avantageusement, ladite pièce de guidage peut exercer, lorsqu'elle repose dans la rainure et sous l'effet d'une rotation de la roue d'actionnement, une poussée sur ladite pièce d'interface pour faire pivoter le volet d'aiguillage.

Avantageusement, le système d'actionnement du volet d'aiguillage peut comprendre une pièce de maintien de la pièce d'interface dudit système d'actionnement, ladite pièce de maintien étant rigidement couplée avec la roue d'actionnement.

Avantageusement, ladite pièce de maintien et ladite pièce d'interface peuvent comprendre des surfaces complémentaires, de sorte que la coopération entre ces surfaces complémentaires maintient en position ladite pièce d'interface lors d'un déplacement de ladite pièce de guidage, alors que le volet d'aiguillage est dans l'une ou l'autre des positions d'obturation.

Par exemple, lesdites surfaces complémentaires peuvent être des arcs de cercle sensiblement de même rayon.

Selon un autre mode de réalisation, le chemin de guidage peut être formé par un logement de guidage ménagé dans la pièce de guidage du système d'actionnement du volet d'aiguillage, ledit logement de guidage ayant deux bords latéraux opposés contre lesquels ladite pièce de guidage vient sélectivement en contact, lorsque le volet d'aiguillage pivote jusqu'à l'une à l'autre des positions d'obturation.

Un tel exemple de réalisation, est décrit en détail dans la demande Française n° 1352229 déposée le 13 mars 2013 par la Demanderesse.

Préférentiellement, le logement de guidage peut comprendre deux segments ayant une extrémité commune.

Avantageusement, au niveau de chaque extrémité opposée à l'extrémité commune d'un segment, le bord latéral du segment le plus proche de l'autre segment peut s'étendre radialement au-delà de l'autre bord latéral dudit segment.

Avantageusement, ladite pièce de guidage peut définir en outre un chemin de maintien de ladite pièce d'interface pour maintenir le volet d'aiguillage dans l'une ou l'autre des positions d'obturation.

Préférentiellement, le chemin de maintien et le chemin de guidage peuvent communiquer par au moins un bord latéral commun.

Avantageusement, un ressort peut coopérer avec le corps de la vanne et la pièce d'interface du système d'actionnement du volet d'aiguillage, et être configuré pour sélectivement maintenir en position d'obturation le volet d'aiguillage.

Avantageusement, la vanne peut être placée dans une boucle de recirculation des gaz d'échappement permettant à tout ou partie des gaz à l'échappement d'un moteur thermique, notamment d'un véhicule, d'être réinjectés à l'admission de ce moteur, la vanne comprenant un refroidisseur et un canal de dérivation contournant ledit refroidisseur, le volet de dosage régulant le flux gazeux dans ladite boucle de recirculation des gaz d'échappement, et le volet d'aiguillage obturant, soit une voie d'accès audit refroidisseur, soit ledit canal de dérivation.

La boucle de recirculation des gaz d'échappement peut être une boucle haute pression ou basse pression.

Le document EP 2 187 032 A2 divulgue une vanne de contrôle moteur comprenant les caractéristiques décrites dans le préambule de la revendication 1.

On donne ci-après, une description détaillée, d'un mode de réalisation préféré d'une vanne selon l'invention, en se référant aux figures 1 à 6.
- La figure 1 est une vue schématique d'une boucle EGR basse pression dans laquelle peut être utilisée la vanne,
- La figure 2 est un diagramme montrant la position angulaire du volet de dosage et du volet d'aiguillage en fonction de la position angulaire de la roue d'actionnement,
- Les figures 3a, 3c et 3e sont trois vues de dessous du mécanisme d'actionnement d'un volet de dosage d'une vanne selon l'invention, pour trois positions différentes de la roue d'actionnement dudit mécanisme,
- Les figures 3b, 3d et 3f sont trois vues de dessus, représentant respectivement le mécanisme de fonctionnement du volet de dosage selon les figures 3a, 3c et 3e,
- Les figures 4a, 4c, 4e et 4g sont quatre vues de dessous du dispositif d'actionnement d'une vanne selon l'invention, à quatre stades différents de rotation dans le même sens de la roue d'actionnement, respectivement d'une position d'obturation du volet de dosage à une position de complète ouverture dudit volet,
- Les figures 4b, 4d, 4f et 4h sont quatre vues de dessus, représentant respectivement le dispositif d'actionnement selon les figures 4a, 4c, 4e et 4g,
- Les figures 5a, 5c et 5e sont trois vues de dessous du dispositif d'actionnement d'une vanne selon l'invention, à trois stades différents de rotation dans le sens opposé de la roue d'actionnement, respectivement entre une position d'ouverture partielle du volet de dosage et une position de complète ouverture dudit volet,
- Les figures 5b, 5d et 5f sont trois vues de dessus, représentant respectivement le dispositif d'actionnement selon les figures 5a, 5c, et 5e,
- La figure 6 est une vue en perspective d'une vanne selon l'invention.

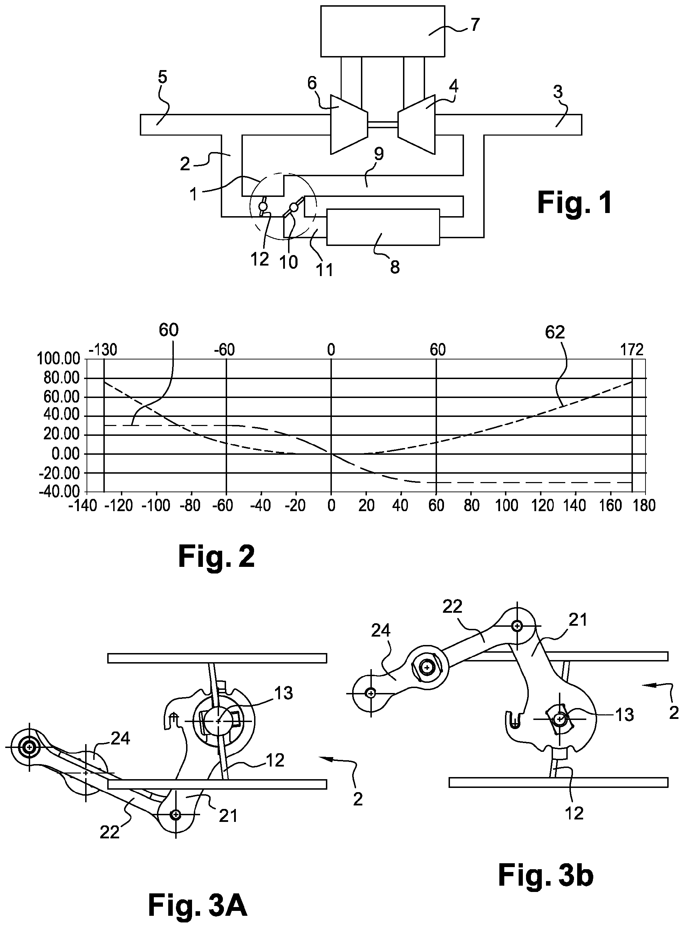

En se référant à la figure 1, une vanne 1 est une vanne de recirculation des gaz d'échappement basse pression placée sur une boucle EGR reliant une ligne d'échappement 3 en aval d'une turbine 4 à un circuit d'admission 5 d'air frais en amont d'un compresseur 6, ledit turbocompresseur 4,6 étant par ailleurs conventionnellement connecté à un moteur thermique 7. La boucle EGR comprend la vanne 1, un refroidisseur 8 des gaz recirculés et un canal de dérivation 9 desdits gaz prenant naissance en amont dudit refroidisseur 8 et débouchant dans une voie 2 de sortie de la boucle EGR, en aval de ce refroidisseur 8. La vanne 1 est munie d'un volet de dosage 12 mobile en rotation autour d'un axe 13, ledit volet de dosage 12 réglant la section de passage des gaz dans la voie 2 donc dans la boucle EGR. La vanne 1 dispose également d'un volet d'aiguillage 10 mobile en rotation autour d'un axe 14, entre une première position d'obturation du canal de dérivation 9 et une deuxième position d'obturation d'un passage 11 d'accès au refroidisseur 8. Le volet d'aiguillage 10 et le volet de dosage 12 sont pilotés dans leur mouvement en rotation, au moyen d'un dispositif d'actionnement 15 commun.

Le dispositif d'actionnement 15 commun des deux volets 10,12 comporte une roue d'actionnement 16, apte à être mise en rotation dans les deux sens au moyen d'un moteur électrique 50 engrainant sur un pignon intermédiaire 51, le pignon intermédiaire 51 engrainant sur la roue 16 d'actionnement. Le sens de rotation de ladite roue 16 est dicté par la position d'obturation que l'on souhaite affecter au volet d'aiguillage 10. Cette roue 16 pilote à la fois le pivotement du volet de dosage 12 et le pivotement du volet d'aiguillage 10 selon une cinématique synchronisée.

Ainsi, le dispositif d'actionnement 15 comprend un système d'actionnement du volet de dosage 12 et un système d'actionnement du volet d'aiguillage 10.

La figure 2 représente :
- en ordonnée, la position angulaire du volet de dosage 12 et du volet d'aiguillage 10,
- en abscisse, la position angulaire de la roue d'actionnement 16.

La courbe 60 représente la position angulaire du volet d'aiguillage 10 et la courbe 62 représente la position angulaire du volet de dosage 12.

Les différentes positions angulaires du volet de dosage et du volet d'aiguillage représentées aux figures 3a à 5f sont ainsi visibles sur les courbes de la figure 2, a savoir :

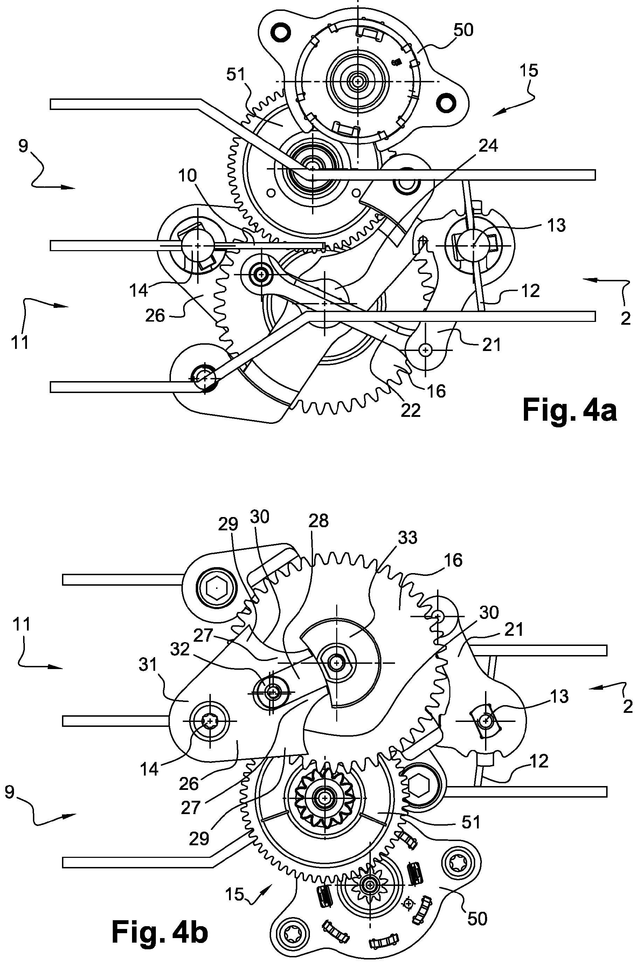

- les figures 3a, 3b, 4a et 4b pour une position angulaire de 0° de la roue d'actionnement,

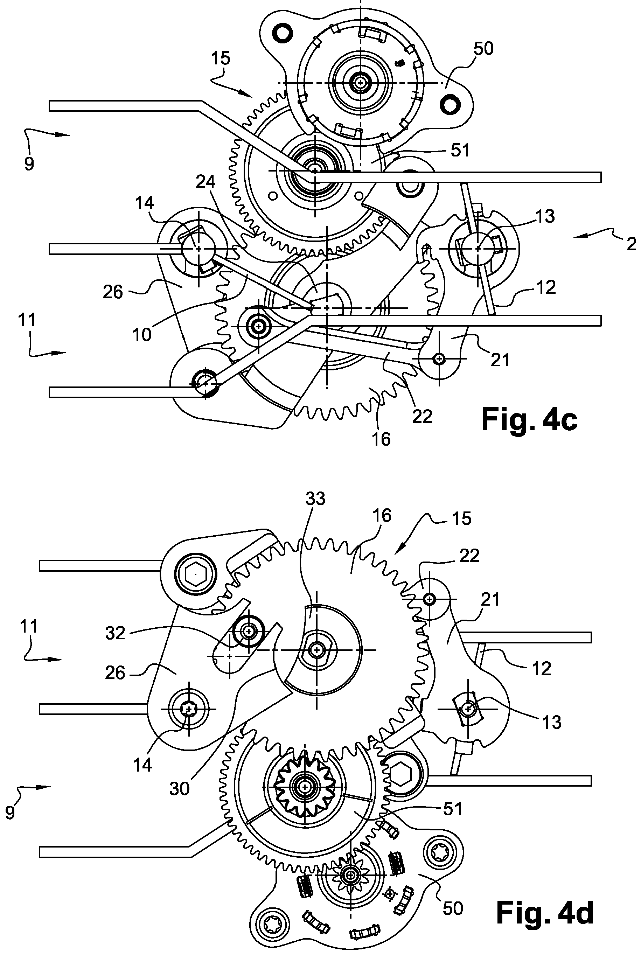

- les figures 4c et 4d pour une position angulaire de 40° de la roue d'actionnement,

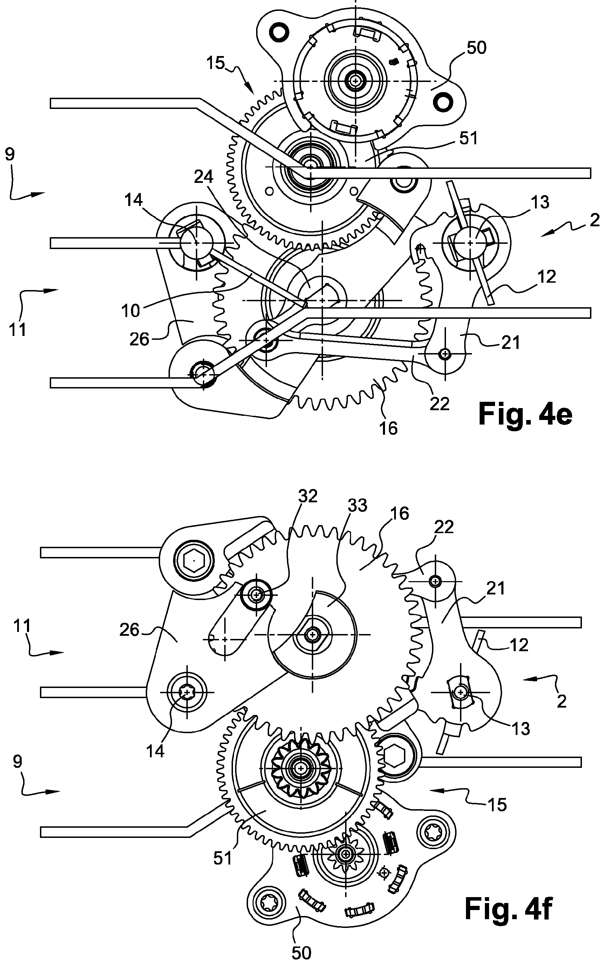

- les figures 4e et 4f pour une position angulaire de 60° de la roue d'actionnement,

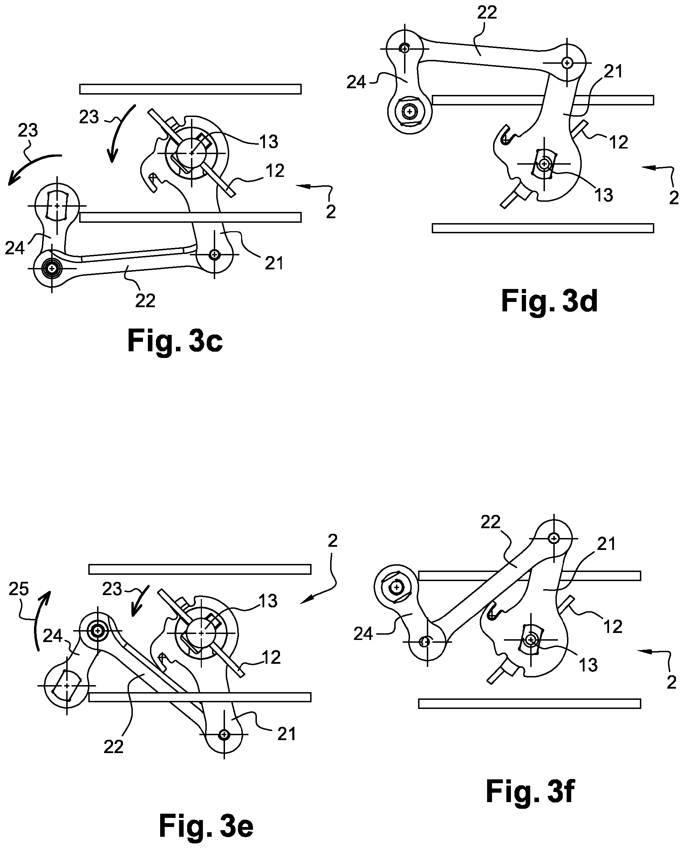

- les figures 3c et 3d, pour une position angulaire de 120° de la roue d'actionnement,

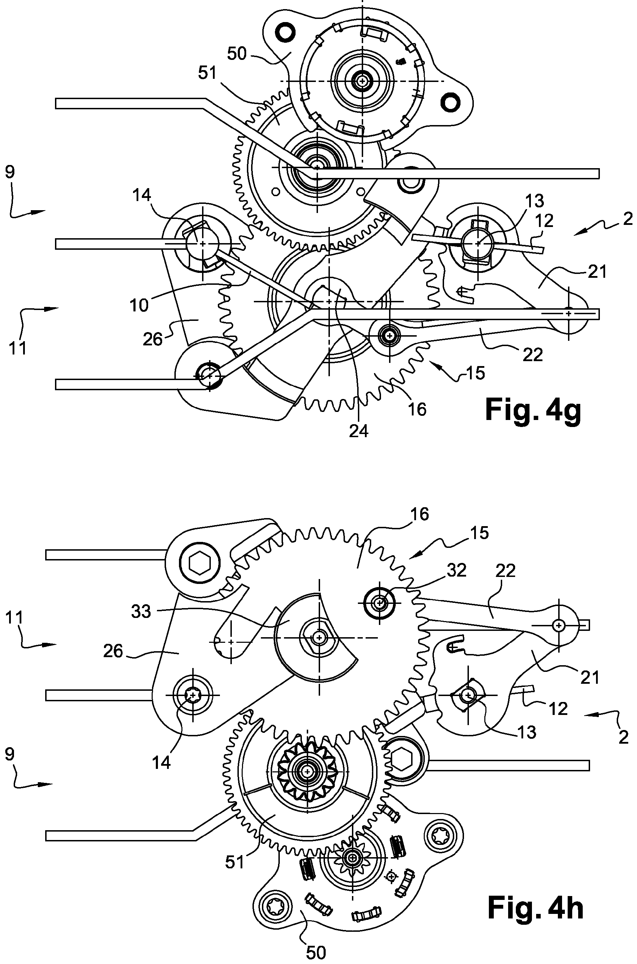

- les figures 4g et 4h, pour une position angulaire de 172° de la roue d'actionnement,

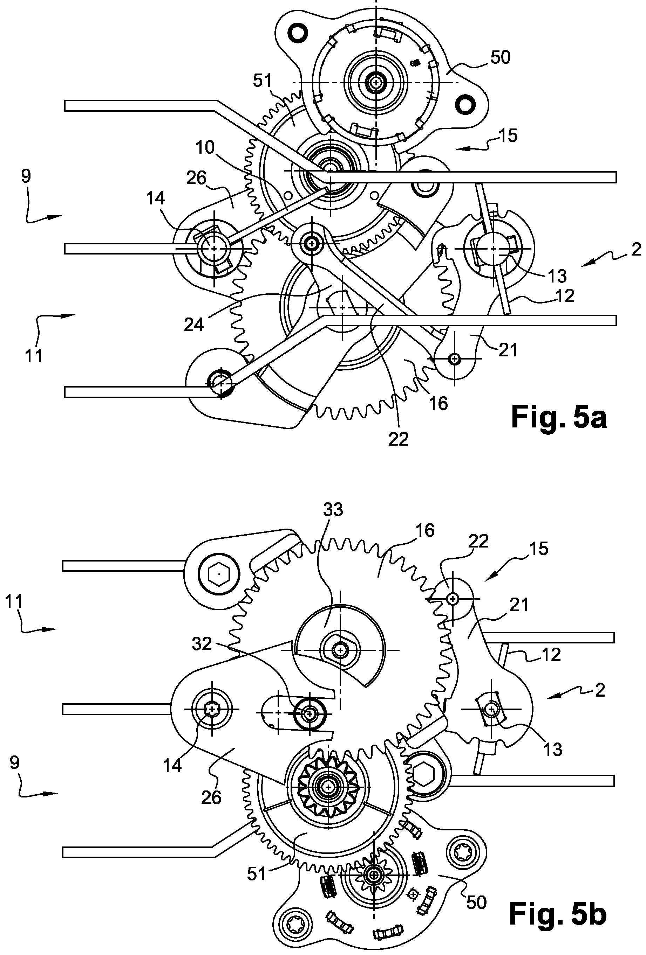

- les figures 5a et 5b, pour une position angulaire de -40° de la roue d'actionnement,

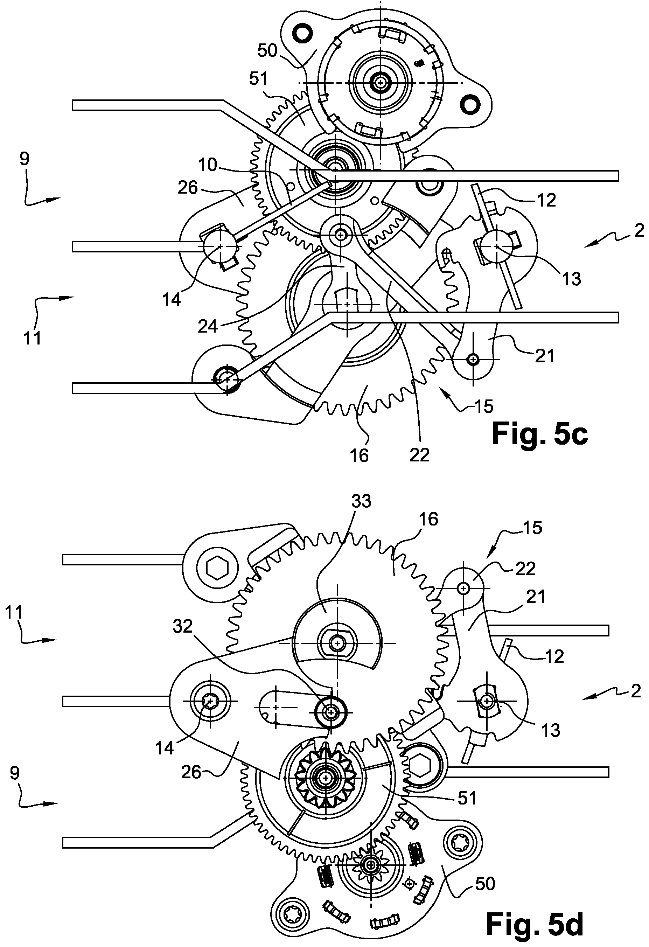

- les figures 5c et 5d, pour une position angulaire de -60° de la roue d'actionnement,
- les figures 3e et 3f, pour une position angulaire de -100° de la roue d'actionnement,

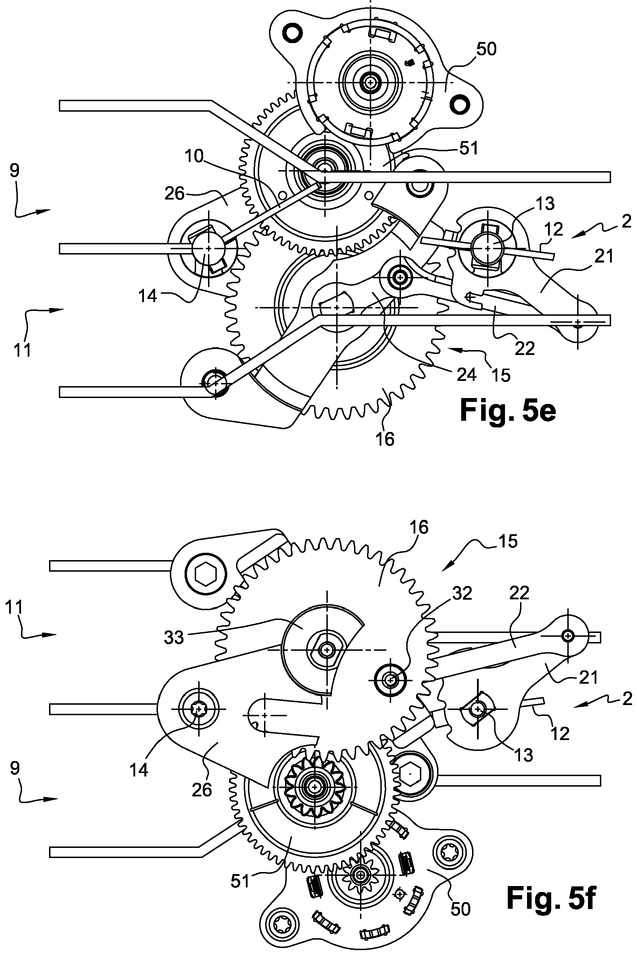

- les figures 5e et 5f, pour une position angulaire de -130° de la roue d'actionnement.

Le volet de dosage 12 est dans l'exemple considéré en position d'obturation de la voie 2 de sortie de la boucle EGR, lorsqu'il a une position angulaire d'environ 0°, c'est-à-dire lorsque la roue d'actionnement à une position angulaire de 0°.

Ainsi, à partir d'une première configuration du dispositif d'actionnement 15 dans laquelle la roue 16 se trouve dans une position de référence à 0°, le volet de dosage 12 est en position d'obturation de la voie 2 (position angulaire égale à 0°) et le volet d'aiguillage 10 est dans une position dans laquelle il n'obture ni la voie 9 ni la voie 11 (position angulaire égale à 0°), une mise en rotation de la roue d'actionnement 16 dans un premier sens (pour atteindre 172°) ou dans un deuxième sens opposé au premier sens (pour atteindre -130°) entraine:
- un pivotement du volet 12 de dosage toujours dans le même sens et marqué par une position angulaire maximale positive d'environ 75°,
- un pivotement du volet d'aiguillage, pour respectivement atteindre -30° ou 30°.

Autrement dit, quel que soit le sens de rotation de la roue 16 à partir de la position de référence, le volet de dosage 12 pivote toujours dans le même sens avec une amplitude voisine de 75° à partir de la position dans laquelle il obture la voie 2 et le volet d'aiguillage 10 pivote dans un premier sens ou dans un deuxième sens, pour obturer l'une ou l'autre des voies 9 et 11.

Toujours à partir de la première configuration du dispositif d'actionnement 15, et selon une première phase, c'est à dire pour un passage de la roue d'actionnement d'une position angulaire de 0° à une position angulaire d'environ 60° ou -60° :
- la courbe 62 passe d'une position angulaire de 0° à environ 10°, quelque soit le sens de rotation de la roue d'actionnement,
- la courbe 60 passe d'une position angulaire de 0° à environ 30° ou -30° en fonction du sens de rotation de la roue d'actionnement.

Selon une deuxième phase, c'est-à-dire pour un passage de la roue d'actionnement d'une position angulaire d'environ 60° à environ 172° ou d'une position angulaire d'environ -60° à environ -130°,
- la courbe 62 passe d'une position angulaire d'environ 10° à environ 75°, quelque soit le sens de rotation de la roue d'actionnement,
- la courbe 60 reste à une valeur d'environ 30° ou -30° selon le sens de rotation de la roue d'actionnement.

Ainsi en partant de la première configuration du dispositif d'actionnement 15, une rotation selon un premier sens de la roue d'actionnement 16 jusqu'à 60° entraine selon la première phase, d'une part, une variation angulaire de 0° à -30° du volet d'aiguillage 10 traduisant un pivotement dans un sens pour passer d'une position d'ouverture à une position d'obturation de l'une des deux voies 9,11, et d'autre part, à une variation angulaire de 0° à environ 10° du volet de dosage 12 pour permettre une ouverture minimale dudit volet 12 sans passage significatif de gaz. Autrement dit, le volet de dosage 12 demeure dans une position de quasi fermeture sur cette plage angulaire de la roue d'actionnement 16. Selon la deuxième phase, lorsque la rotation de la roue d'actionnement 16 se poursuit dans le premier sens pour atteindre 172°, le volet d'aiguillage 10 demeure figé dans une position angulaire de -30° traduisant son maintien dans la position d'obturation qu'il a atteinte, alors que la position angulaire du volet de dosage 12 varie de 10° à 75°, traduisant une ouverture progressive dudit volet 12 jusqu'à atteindre une position d'ouverture maximale.

Toujours à partir de la première configuration du dispositif d'actionnement 15, une rotation dans un deuxième sens opposé au premier sens de la roue d'actionnement 16 jusqu'à -60°, fait pivoter le volet d'aiguillage 10 d'une position à 0° à une position à 30°, correspondant au passage d'une position d'ouverture à une position d'obturation de l'autre voie 9,11, et à un pivotement d'une position à 0° à une position à environ 10° du volet de dosage 12 pour permettre une ouverture minimale dudit volet 12 sans passage significatif de gaz. Autrement dit, par rapport à ce qui a été observé précédemment lorsque la roue d'actionnement 16 tournait dans le premier sens le volet d'aiguillage 10 effectue un pivotement dans le premier sens pour venir obturer l'autre voie 9,11 tandis que le volet de dosage 12 pivote lui aussi dans le premier sens pour s'entrouvrir. Lorsque la rotation de la roue d'actionnement 16 se poursuit dans le deuxième sens pour atteindre - 130°, le volet d'aiguillage 10 demeure figé dans une position angulaire de 30° traduisant son maintien dans la position d'obturation qu'il a atteinte, alors que la position angulaire du volet de dosage 12 varie de 10° à 75°, traduisant une ouverture progressive dudit volet 12 jusqu'à atteindre une position d'ouverture maximale.

Les figures 3a à 3f, illustrent le système d'actionnement du volet de dosage 12, ledit volet de dosage 12 étant apte à pivoter autour de son axe de rotation 13. Le système d'actionnement du volet de dosage 12 comporte une pièce d'interface qui se présente ici sous la forme d'une manivelle 21 et qui est rigidement couplée au volet de dosage 12. Cette pièce d'interface 21 coopère avec un organe de guidage afin de faire pivoter le volet de dosage 12.

L'organe de guidage du système d'actionnement du volet de dosage comprenant ici deux leviers 22 et 24 articulés en rotation entre eux, via une extrémité commune. Le levier 24 comprend une autre extrémité coopérant avec la roue d'actionnement 16 et l'autre levier 22 comprend une autre extrémité coopérant avec la manivelle 21 du système d'actionnement du volet de dosage.

Une rotation de la roue d'actionnement 16 peut ainsi entrainer en rotation le levier 24. Le levier 22 est ici une tige rigide. La roue d'actionnement 16, le levier 22, la manivelle 21, le levier 24 et le volet de dosage 12 sont placés dans l'espace et sont agencés les uns par rapport aux autres, de telle manière que la mise en rotation de la roue d'actionnement 16, à partir de ladite position de référence, dans un sens ou dans l'autre, provoque par l'intermédiaire du levier 22, un pivotement du volet de dosage 12 toujours dans le même sens.

Les figures 3a et 3b représentent le volet de dosage 12 dans la position de référence. Les figures 3c et 3d représentent le volet de dosage 12 après que la roue d'actionnement 16 a tourné pour atteindre une position angulaire de 120°, c'est-à-dire selon le premier sens de rotation matérialisé par la flèche 23 à la figure 3a. Les figures 3e et 3f représentent le volet de dosage 12 après que la roue d'actionnement 16 a tourné pour atteindre une position angulaire de -100°, c'est-à-dire selon le deuxième sens de rotation opposé au premier sens et matérialisé par la flèche 25 à la figure 3e.

Ainsi, quel que soit le sens de rotation de la roue d'actionnement 16 à partir de la position de référence, la manivelle 21, donc le volet de dosage 12, pivote dans le même sens de rotation, en l'occurrence, le sens matérialisé par la flèche 23 aux figures 3c et 3e.

Bien que cela ne figure pas sur les figures 3c à 3f, une poursuite de la rotation de la roue d'actionnement 16 dans un sens ou dans l'autre, accentuerait le pivotement du volet de dosage 12 autour de son axe 13 toujours dans le même sens afin d'accroitre son ouverture.

Les figures 4a à 4h, et 5a à 5f, illustrent le système d'actionnement du volet de dosage 12 et le système d'actionnement du volet d'aiguillage 10.

Sur ces figures, le système d'actionnement du volet de dosage 12 est représenté de la même manière que sur les figures 3a à 3f.

Le volet d'aiguillage 10 est mû en rotation au moyen d'un mécanisme de type « croix de malte », dont le principe repose sur une mise en rotation discontinue d'un objet en forme de croix de malte au moyen d'une rotation continue d'une pièce motrice interagissant avec ledit objet. Dans le cadre de l'invention, l'objet en forme de croix de malte est une pièce d'interface 26, qui a été solidarisée au volet 10. Cette pièce d'interface 26 comprend deux bras parallèles 27 ménageant entre eux une rainure 28 définissant un chemin de guidage, comme on le verra par la suite, et deux excroissances latérales 29, chacune desdites excroissances 29 étant placée de chaque coté de l'axe longitudinal de la rainure 28.

Un bras 27 et une excroissance 29 placés du même coté par rapport à l'axe longitudinal de la rainure 28 sont reliés l'un à l'autre par une surface en arc de cercle 30. La pièce d'interface 26 dispose d'une embase 31 alignée sur l'axe longitudinal de la rainure 28, l'axe reliant les deux excroissances 29 séparant ladite embase 31 et les deux bras 27. De cette manière, chaque bras 27 possède une extrémité implantée dans l'embase 31, et une autre extrémité qui est libre. Le volet 10 possède un axe de rotation 14 lui permettant de pivoter entre les deux positions d'obturation des deux voies 9,11, la pièce d'interface 26 étant rigidement fixée à une extrémité du volet 10 par l'intermédiaire de ladite embase 31. Plus précisément, la pièce d'interface 26 est fixée au volet 10 de manière à ce que l'embase 31 de la pièce d'interface 26 soit traversée par l'axe de rotation 14 du volet 10. Ainsi, la mise en rotation de la pièce d'interface 26 entraine simultanément la rotation du volet 10 autour de son axe de rotation 14 avec le même angle.

Outre la pièce d'interface 26, le système d'actionnement du volet d'aiguillage 10 comprend une pièce 32 de guidage, ici un ergot rapporté sur la roue d'actionnement 16 et sur lequel coopère dans l'exemple décrit un roulement à billes. L'ergot 32 est par exemple cylindrique et placé en périphérie et émerge du plan de la roue d'actionnement 16 selon une direction perpendiculaire.

Le système d'actionnement du volet d'aiguillage 10 comprend encore une pièce 33 de maintien qui est ici une fraction d'une autre roue coaxiale avec la roue d'actionnement 16, et solidaire de celle-ci. Cette autre roue 33 est disposée dans la zone centrale de la roue d'actionnement 16. L'autre roue 33 émerge du plan de la roue 16 selon une direction perpendiculaire, et créé ainsi une surépaisseur. La section transversale de l'autre roue 33, qui est perpendiculaire à son axe de rotation, présente un contour circulaire sur plus de la moitié de sa circonférence, ainsi qu'un évidement délimité par un tronçon incurvé reliant le contour circulaire partiel pour fermer ladite section.

En se référant aux figures 4a et 4b, lorsque la roue d'actionnement 16 se retrouve dans une position de référence correspondant à la première configuration du dispositif d'actionnement 15, l'ergot 32 de la roue d'actionnement 16 est positionné au fond de la rainure 28. Les deux bras 27 de la pièce d'interface 26 occupent alors le creux laissé vacant par la pièce 33 de maintien, leur extrémité libre venant araser le tronçon incurvé de ladite pièce 33 de maintien.

En se référant aux figures 4c à 4h, la roue d'actionnement 16 tourne progressivement dans le sens matérialisé par la flèche 23 à la figure 3c, ce sens de rotation étant représentatif des vues de dessous c'est-à-dire pour les figures 4c, 4e et 4g. Les figures 4c et 4d, 4e et 4f, 4g et 4h représentent l'état des volets 10 et 12 pour des positions angulaires de la roue d'actionnement respectivement aux valeurs de 40°, 60° et 172°.

En se référant aux figures 4c et 4d, lorsque la roue 16 est mise en rotation, dans le sens matérialisé, pour la vue de dessous, par la flèche 23 à la figure 3c, à partir de sa position de référence, l'ergot 32 provoque la mise en rotation de la pièce d'interface 26 et donc du volet d'aiguillage 10 qui lui est solidaire, en exerçant une poussée sur l'un des deux bras 27 bordant la rainure 28.

En se référent aux figures 4e et 4f, le volet 10 atteint la position d'obturation de la voie 11.

En se référant aux figures 4g et 4h, une fois que le volet d'aiguillage 10 est parvenu à sa position d'obturation de la voie 11, la roue d'actionnement 16 peut poursuivre sa rotation de manière à ce qu'un segment 30 en arc de cercle de la pièce d'interface 26 vienne en appui contre la pièce 33 de maintien, et plus spécifiquement contre la surface externe de la partie cylindrique de ladite pièce 33. Cette pièce 33 de maintien contribue à maintenir le volet d'aiguillage 10 dans une position d'obturation de la voie 11, en venant en appui contre un segment 30 en arc de cercle de la pièce d'interface 26.

En se référant aux figures 5a à 5f, la roue d'actionnement 16 peut également être mise en rotation dans le sens opposé à partir de sa position de référence, à savoir dans le sens matérialisé par la flèche 25 de la figure 3e, , ce sens de rotation étant représentatif des vues de dessous c'est-à-dire pour les figures 5a, 5c et 5e, dans le but de permettre au volet d'aiguillage 10 d'obturer la voie 9. Tout ce qui a été décrit précédemment concernant la cinématique de pivotement du volet d'aiguillage 10 pour obturer la voie 11, demeure également valable lorsque ledit volet 10 vient obturer la voie 9.

Le dispositif d'actionnement 15 qui vient d'être décrit combine le système d'actionnement du volet de dosage 12 et le système d'actionnement du volet d'aiguillage 10 décrits précédemment, selon une cinématique synchronisée, afin d'optimiser au mieux les conditions de pivotement du volet de dosage 12 et du volet d'aiguillage 10.

Les figures 4a et 4b représentent respectivement en vue de dessous et de dessus, la première configuration du dispositif d'actionnement 15.

En se référant aux figures 4c et 4d, la première phase de la rotation de la roue d'actionnement 16 dans un sens, à partir de sa position de référence, permet de faire pivoter simultanément le volet d'aiguillage 10, afin qu'il vienne dans une position d'obturation de la voie 11, et le volet de dosage 12 afin qu'il s'entrouvre légèrement en permettant un passage de gaz insignifiant dans la voie 2.

Ainsi, la rotation du volet d'aiguillage 10 jusqu'à cette position d'obturation de la voie 11, s'effectue alors que le volet de dosage 12 demeure dans une position de quasi fermeture de la voie 2.

En se référant aux figures 4e et 4f, le volet d'aiguillage 10 atteint la position d'obturation de la voie 11.

En se référant aux figures 4g et 4h, la roue d'actionnement 16 poursuit selon la deuxième phase sa rotation dans le même sens, afin d'ouvrir progressivement le volet de dosage 12 pour réguler le passage des gaz recirculés dans la voie 2, tout en maintenant le volet d'aiguillage 10 dans sa position d'obturation, grâce à la pièce de maintien 33 de la roue d'actionnement 16, contre laquelle vient en appui la pièce d'interface 26. L'ouverture du volet de dosage 12 s'effectue par un pivotement autour de son axe 13 du volet de dosage 12, et permet aux gaz de circuler dans la voie de sortie 2 de la boucle EGR avec un débit prédéfini

La rotation de la roue d'actionnement 16 peut se poursuivre, toujours dans le même sens, jusqu'à ce que le volet de dosage 12 atteigne une position d'ouverture maximale pour permettre aux gaz d'échappement de passer dans la voie 2 avec un débit maximal. Ainsi, le réglage du degré d'ouverture du volet de dosage 12 s'effectue par un pivotement dudit volet 12 de dosage commandé par la roue d'actionnement 16, alors que le volet d'aiguillage 10 demeure dans une position d'obturation de la voie 11. A tout moment, la roue d'actionnement 16 peut être mise en rotation dans le sens opposé pour ajuster la position d'ouverture du volet de dosage 12 en réduisant le débit des gaz dans la voie 2.

En se référant aux figures 5a et 5b, la rotation de la roue d'actionnement 16 dans le sens opposé, partant de la première configuration du dispositif d'actionnement 15, permet selon la première phase de faire pivoter simultanément le volet d'aiguillage 10, afin qu'il vienne dans une position d'obturation de la voie 9, et le volet de dosage 12 afin qu'il s'entrouvre légèrement en permettant un passage de gaz insignifiant dans la voie 2. Dans ce cas, le volet d'aiguillage 10 pivote dans un sens qui est opposé à celui selon lequel il pivote dans l'exemple décrit en référence aux figures 4a à 4e, pour venir obturer la voie 11, tandis que le volet de dosage 12 pivote toujours dans le même sens que celui selon lequel il pivote dans l'exemple décrit en référence aux figures 4a à 4e, afin de s'entrouvrir légèrement.

En se référant aux figures 5c et 5d, le volet d'aiguillage 10 atteint la position d'obturation de la voie 9.

En se référant aux figures 5e et 5f, la roue d'actionnement 16 poursuit selon la deuxième phase sa rotation dans le même sens, afin d'ouvrir progressivement le volet de dosage 12 pour réguler le passage des gaz recirculés dans la voie 2, tout en maintenant le volet d'aiguillage 10 dans sa position d'obturation de la voie 9, grâce à la pièce de maintien 33 de la roue d'actionnement 16, contre laquelle vient en appui la pièce d'interface 26. L'ouverture du volet de dosage 12 s'effectue par un pivotement autour de son axe 13 dudit volet 12, et permet aux gaz de pénétrer dans la voie 2 avec un débit prédéfini.

La rotation de la roue d'actionnement 16 peut se poursuivre, toujours dans le même sens, jusqu'à ce que le volet de dosage 12 atteigne une position d'ouverture maximale pour permettre aux gaz d'échappement de passer dans la voie 2 avec un débit maximal. Ainsi, le réglage du degré d'ouverture du volet de dosage 12 s'effectue par un pivotement dudit volet 12 de dosage commandé par la roue d'actionnement 16, alors que le volet d'aiguillage 10 demeure dans une position d'obturation de la voie 9. A tout moment, la roue d'actionnement 16 peut être mise en rotation dans le sens opposé à celui qui la déplace depuis la première configuration pour ajuster la position d'ouverture du volet de dosage 12 en réduisant le débit des gaz dans la voie 2.

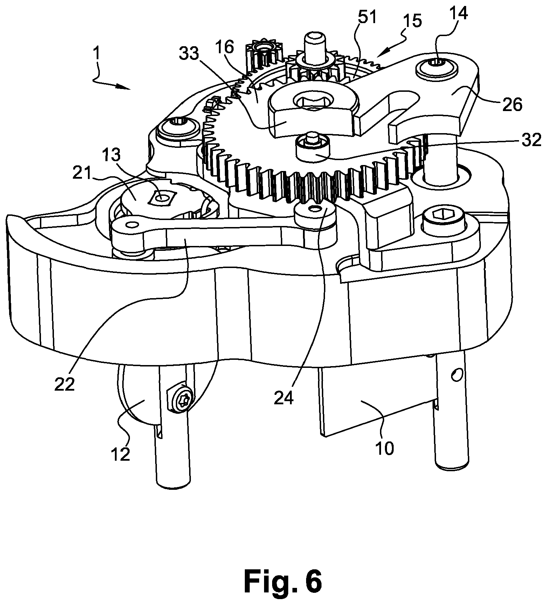

La figure 6 est une vue en perspective de la vanne 1 selon l'invention. La vanne est représentée dans une configuration dans laquelle la position angulaire de la roue d'actionnement 16 est d'environ 135°, c'est-à-dire que le volet d'aiguillage 10 est en position d'obturation de la voie 11 et le volet de dosage 12 a une position angulaire d'environ 50°. La pièce d'interface 26, la pièce de guidage 32 et la pièce de maintien 33, constituant dans l'exemple considéré le système d'actionnement du volet d'aiguillage 10, sont situés en regard d'une première face de la roue d'actionnement 16. La manivelle 21 et les leviers 24 et 22 constituant dans l'exemple considéré le système d'actionnement du volet de dosage 12, sont situés en regard d'une deuxième face, opposée à la première face, de la roue d'actionnement 16.

## Revendications

1. Vanne (1), notamment de contrôle moteur, comprenant :
- au moins trois voies (2, 9, 11) débouchant dans un espace intérieur commun,
- un volet de dosage (12) apte à pivoter dans une première voie (2) pour faire varier la section de passage d'un fluide dans cette dernière,
- un volet d'aiguillage (10) apte à pivoter entre une position d'obturation d'une deuxième voie (9) et une position d'obturation d'une troisième voie (11),
- un dispositif d'actionnement (15) commun des volets (10,12),
le dispositif d'actionnement (15) comportant au moins une roue d'actionnement (16) mobile en rotation pour faire pivoter l'un au moins du volet d'aiguillage (10) et du volet de dosage (12),
le dispositif d'actionnement (15) présentant au moins une première configuration dans laquelle le volet de dosage (12) est dans une position d'obturation de la première voie (2) et dans laquelle le volet d'aiguillage (10) est dans une position intermédiaire dans laquelle il n'est ni en position d'obturation de la deuxième voie (9) ni en position d'obturation de la troisième voie (11), et
le dispositif d'actionnement (15) étant configuré pour que la rotation de la roue d'actionnement (16) alors que le dispositif d'actionnement (15) est dans la première configuration conduise :
- selon une première phase à un pivotement important du volet d'aiguillage (10) alors que le volet de dosage (12) n'est soumis qu'à un faible pivotement, et
- selon une deuxième phase ultérieure à la première phase au pivotement du volet de dosage (12) pour modifier la section de passage du fluide dans la première voie (2) sans que la position du volet d'aiguillage (10) ne soit modifiée,
la vanne étant **caractérisée en ce que** le dispositif d'actionnement (15) est configuré pour que la rotation de la roue d'actionnement (16) alors que le dispositif d'actionnement (15) est dans la première configuration conduise au pivotement du volet de dosage (12) dans un seul et même sens de rotation, indépendamment du sens de rotation de la roue d'actionnement (16).

2. Vanne selon la revendication 1, le dispositif d'actionnement (15) étant configuré pour que la rotation de la roue d'actionnement (16) alors que le dispositif d'actionnement (15) est dans la première configuration conduise :
- dans un premier sens de rotation au pivotement du volet d'aiguillage (10) jusqu'à la position d'obturation de la deuxième voie (9), et
- dans un deuxième sens de rotation au pivotement du volet d'aiguillage (10) jusqu'à la position d'obturation de la troisième voie (11).

3. Vanne selon l'une quelconque des revendications 1 ou 2, le dispositif d'actionnement (15), étant apte à maintenir le volet d'aiguillage (10) dans l'une ou l'autre des positions d'obturation de la deuxième (9) ou troisième (11) voie alors que la roue d'actionnement (16) poursuit un mouvement de rotation unidirectionnel depuis la première configuration.

4. Vanne selon l'une quelconque des revendications précédentes, le dispositif d'actionnement (15) comprenant un système d'actionnement du volet d'aiguillage, ledit système d'actionnement comprenant une pièce de guidage (32) et une pièce d'interface (26), la roue d'actionnement (16) étant rigidement couplée à la pièce de guidage (32) et le volet d'aiguillage (10) étant rigidement couplé à la pièce d'interface (26), la pièce de guidage (32) coopérant avec la pièce d'interface (26) pour faire pivoter le volet d'aiguillage (10).

5. Vanne selon l'une quelconque des revendications précédentes, le dispositif d'actionnement (15) comprenant un système d'actionnement du volet de dosage (12), ledit système d'actionnement comprenant un organe de guidage (24, 22) et une pièce d'interface (21), la roue d'actionnement (16) étant reliée à l'organe de guidage (24) de manière à faire pivoter celui-ci lors de sa rotation, et la pièce de d'interface (21) étant rigidement couplée au volet de dosage (12), et l'organe de guidage (22) coopérant avec la pièce d'interface (21) pour faire pivoter le volet de dosage (12).

6. Vanne selon les revendications 4 et 5, l'organe de guidage (22, 24) du système d'actionnement du volet de dosage (12) comprenant un premier levier (24) et un deuxième levier (22) articulés en rotation entre eux, via une extrémité commune, le premier levier (24) comprenant une autre extrémité coopérant par un premier point de pivot avec la roue d'actionnement (16) et le deuxième levier (22) comprenant une autre extrémité coopérant par un deuxième point de pivot avec la pièce d'interface (21) du système d'actionnement du volet de dosage (12).

7. Vanne selon la revendication 6, la roue d'actionnement (16) coopérant avec la pièce de guidage (32) du système d'actionnement du volet d'aiguillage (10) par une première zone de ladite roue et la roue d'actionnement (16) étant en regard de l'extrémité commune des premier (24) et deuxième (22) leviers de l'organe de guidage (22, 24) du système d'actionnement du volet de dosage (12) par une deuxième zone de ladite roue, différente de la première zone.

8. Vanne selon l'une quelconque des revendications 6 à 7, l'extrémité commune des premier (24) et deuxième (22) leviers, le premier point de pivot et le deuxième point de pivot étant alignés lorsque le dispositif d'actionnement (15) est dans la première configuration.

9. Vanne selon l'une quelconque des revendications 4 ou 6, la pièce d'interface (26) du système d'actionnement du volet d'aiguillage (10) étant configurée pour définir un chemin de guidage de la pièce de guidage (32) avec laquelle elle coopère.

10. Vanne selon la revendication 9, le chemin de guidage étant formé par une rainure borgne (28) ménagée dans ladite pièce d'interface (26), ladite pièce de guidage (32) reposant dans la rainure borgne (28) lorsque le volet d'aiguillage (10) est dans la position intermédiaire.

11. Vanne selon la revendication 10, ladite pièce de guidage (32) exerçant, lorsqu'elle repose dans la rainure (28) et sous l'effet d'une rotation de la roue d'actionnement (16), une poussée sur ladite pièce d'interface (26) pour faire pivoter le volet d'aiguillage (10).

12. Vanne selon l'une quelconque des revendications 9 à 11, le système d'actionnement du volet d'aiguillage (10) comprenant une pièce de maintien (33) de la pièce d'interface (26) dudit système d'actionnement, ladite pièce de maintien (33) étant rigidement couplée avec la roue d'actionnement (16).

13. Vanne selon la revendication 12, ladite pièce de maintien (33) et ladite pièce d'interface (26) comprenant des surfaces complémentaires, de sorte que la coopération entre ces surfaces complémentaires maintient en position ladite pièce d'interface (26) lors d'un déplacement de ladite pièce de guidage (32), alors que le volet de d'aiguillage (10) est dans l'une ou l'autre des positions d'obturation.

14. Vanne de contrôle moteur selon l'une quelconque des revendications 1 à 13, étant placée dans une boucle de recirculation des gaz d'échappement comprenant un refroidisseur (8) et un canal de dérivation (9) contournant ledit refroidisseur (8), et le volet de dosage (12) régulant le flux gazeux dans ladite boucle de recirculation des gaz d'échappement, le volet d'aiguillage (10) obturant, soit une voie d'accès (11) audit refroidisseur (8), soit ledit canal de dérivation (9).

## Patentansprüche

1. Ventil (1), insbesondere zur Motorkontrolle, umfassend:
- mindestens drei Wege (2, 9, 11), die in einen gemeinsamen Innenraum münden,
- eine Dosierklappe (12), die geeignet ist, in einen ersten Weg (2) zu schwenken, um den Durchgangsquerschnitt eines Fluids in diesem letztgenannten zu verändern,
- eine Umlenkklappe (10), die geeignet ist, zwischen einer Verschlussposition eines zweiten Weges (9) und einer Verschlussposition eines dritten Weges (11) zu schwenken,
- eine gemeinsame Betätigungsvorrichtung (15) der Klappen (10, 12),
wobei die Betätigungsvorrichtung (15) mindestens ein drehbewegliches Betätigungsrad (16) umfasst, um mindestens eine von der Umlenkklappe (10) und der Dosierklappe (12) zu schwenken,
wobei die Betätigungsvorrichtung (15) mindestens eine erste Ausführung aufweist, in der die Dosierklappe (12) in einer Verschlussposition des ersten Weges (2) ist und in der die Umlenkklappe (10) in einer Zwischenposition ist, in der sie weder in Verschlussposition des zweiten Weges (9) noch in Verschlussposition des dritten Weges (11) ist, und wobei die Betätigungsvorrichtung (15) derart ausgeführt ist, dass die Drehung des Betätigungsrades (16), während sich die Betätigungsvorrichtung (15) in der ersten Ausführung befindet, zu Folgendem führt:
- gemäß einer ersten Phase einem starken Schwenken der Umlenkklappe (10), während die Dosierklappe (12) nur einem geringen Schwenken unterzogen wird, und
- gemäß einer zweiten Phase nach der ersten Phase dem Schwenken der Dosierklappe (12), um den Durchgangsquerschnitt des Fluids in dem ersten Weg (2) zu verändern, ohne dass die Position der Umlenkklappe (10) verändert wird,
wobei das Ventil **dadurch gekennzeichnet ist, dass** die Betätigungsvorrichtung (15) derart ausgeführt ist, dass die Drehung des Betätigungsrades (16), wenn sich die Betätigungsvorrichtung (15) in der ersten Ausführung befindet, zum Schwenken der Dosierklappe (12) in eine einzige und selbe Drehrichtung heraus führt, unabhängig von der Drehrichtung des Betätigungsrades (16).

2. Ventil nach Anspruch 1, wobei die Betätigungsvorrichtung (15) derart ausgeführt ist, dass die Drehung des Betätigungsrades (16), während sich die Betätigungsvorrichtung (15) in der ersten Ausführung befindet, zu Folgendem führt:
- in einer ersten Drehrichtung dem Schwenken der Umlenkklappe (10) in die Verschlussposition des zweiten Weges (9), und
- in einer zweiten Drehrichtung dem Schwenken der Umlenkklappe (10) in die Verschlussposition des dritten Weges (11).

3. Ventil nach einem der Ansprüche 1 oder 2, wobei die Betätigungsvorrichtung (15) geeignet ist, die Umlenkklappe (10) in der einen oder der anderen der Verschlusspositionen des zweiten (9) oder dritten (11) Weges zu halten, während das Betätigungsrad (16) eine unidirektionale Drehbewegung ausgehend von der ersten Ausführung weiter verfolgt.

4. Ventil nach einem der vorhergehenden Ansprüche, wobei die Betätigungsvorrichtung (15) ein Betätigungssystem der Umlenkklappe umfasst, wobei das Betätigungssystem einen Führungsabschnitt (32) und einen Schnittstellenabschnitt (26) umfasst, wobei das Betätigungsrad (16) starr an den Führungsabschnitt (32) gekoppelt ist, und die Umlenkklappe (10) starr an den Schnittstellenabschnitt (26) gekoppelt ist, wobei der Führungsabschnitt (32) mit dem Schnittstellenabschnitt (26) zusammenwirkt, um die Umlenkklappe (10) zu schwenken.

5. Ventil nach einem der vorhergehenden Ansprüche, wobei die Betätigungsvorrichtung (15) ein Betätigungssystem der Dosierklappe (12) umfasst, wobei das Betätigungssystem ein Führungselement (24, 22) und einen Schnittstellenabschnitt (21) umfasst, wobei das Betätigungsrad (16) mit dem Führungselement (24) verbunden ist, um dieses bei seiner Drehung zu schwenken, und wobei der Schnittstellenabschnitt (21) starr mit der Dosierklappe (12) gekoppelt ist, und wobei das Führungselement (22) mit dem Schnittstellenabschnitt (21) zusammenwirkt, um die Dosierklappe (12) zu schwenken.

6. Ventil nach den Ansprüchen 4 und 5, wobei das Führungselement (22, 24) des Betätigungssystems der Dosierklappe (12) einen ersten Hebel (24) und einen zweiten Hebel (22) umfasst, die drehbar aneinander über ein gemeinsames Ende angelenkt sind, wobei der erste Hebel (24) ein weiteres Ende umfasst, das über einen ersten Schwenkpunkt mit dem Betätigungsrad (16) zusammenwirkt, und wobei der zweite Hebel (22) ein weiteres Ende umfasst, das über einen zweiten Schenkpunkt mit dem Schnittstellenabschnitt (21) des Betätigungssystems der Dosierklappe (12) zusammenwirkt.

7. Ventil nach Anspruch 6, wobei das Betätigungsrad (16) mit dem Führungsabschnitt (32) des Betätigungssystems der Umlenkklappe (10) über eine erste Zone des Rades zusammenwirkt, und wobei das Betätigungsrad (16) gegenüber dem gemeinsamen Ende des ersten (24) und des zweiten Hebels (22) des Führungselements (22, 24) des Betätigungssystems der Dosierklappe (12) über eine zweite Zone des Rades, die sich von der ersten Zone unterscheidet, angeordnet ist.

8. Ventil nach einem der Ansprüche 6 oder 7, wobei das gemeinsame Ende des ersten (24) und des zweiten Hebels (22), der erste Schwenkpunkt und der zweite Schwenkpunkt fluchtend sind, wenn sich die Betätigungsvorrichtung (15) in der ersten Ausführung befindet.

9. Ventil nach einem der Ansprüche 4 oder 6, wobei der Schnittstellenabschnitt (26) des Betätigungssystems der Umlenkklappe (10) dazu vorgesehen ist, einen Führungsweg des Führungsabschnitts (32), mit dem er zusammenwirkt, zu definieren.

10. Ventil nach Anspruch 9, wobei der Führungsweg von einer Blindnut (28) gebildet ist, die in dem Schnittstellenabschnitt (26) ausgenommen ist, wobei der Führungsabschnitt (32) in der Blindnut (28) angeordnet ist, wenn sich die Umlenkklappe (10) in der Zwischenposition befindet.

11. Ventil nach Anspruch 10, wobei der Führungsabschnitt (32), wenn er in der Nut (28) und unter der Wirkung einer Drehung des Betätigungsrades (16) angeordnet ist, einen Schub auf den Schnittstellenabschnitt (26) ausübt, um die Umlenkklappe (10) zu schwenken.

12. Ventil nach einem der Ansprüche 9 bis 11, wobei das Betätigungssystem der Umlenkklappe (10) einen Halteabschnitt (33) des Schnittstellenabschnitts (26) des Betätigungssystems umfasst, wobei der Halteabschnitt (33) starr mit dem Betätigungsrad (16) gekoppelt ist.

13. Ventil nach Anspruch 12, wobei der Halteabschnitt (33) und der Schnittstellenabschnitt (26) komplementäre Flächen umfassen, so dass das Zusammenwirken zwischen diesen komplementären Flächen den Schnittstellenabschnitt (26) bei einer Verschiebung des Führungsabschnitts (32) in Position hält, während sich die Umlenkklappe (10) in der einen oder der anderen der Verschlusspositionen befindet.

14. Motorkontrollventil nach einem der Ansprüche 1 bis 13, das in einer Rezirkulationsschleife der Abgase angeordnet ist, umfassend einen Kühler (8) und einen Umlenkkanal (9), der den Kühler (8) umgeht, wobei die Dosierklappe (12) den Gasstrom in der Rezirkulationsschleife der Abgase reguliert, wobei die Umlenkklappe (10) entweder einen Zugangsweg (11) zum Kühler (8) oder den Umlenkkanal (9) verschließt.

## Claims

1. Valve (1), notably engine control valve, comprising:
- at least three paths (2, 9, 11) opening into a common interior space,
- a metering flap (12) able to pivot in a first path (2) in order to vary the cross section for the passage of a fluid along the latter,
- a routing flap (10) able to pivot between a position in which it closes off a second path (9) and a position in which it closes off a third path (11),
- a common device (15) for actuating the flaps (10, 12),
the actuating device (15) comprising at least one actuating wheel (16) movable in rotation to cause at least one of the flaps that are the routing flap (10) and the metering flap (12) to pivot,
the actuating device (15) having at least a first configuration in which the metering flap (12) is in a position for closing off the first path (2) and in which the routing flap (10) is in an intermediate position in which it is neither in the position for closing off the second path (9) nor in the position for closing off the third path (11), and the actuating device (15) being configured so that rotation of the actuating wheel (16) when the actuating device (15) is in the first configuration leads:
- in a first phase, to significant pivoting of the routing flap (10) while the metering flap (12) is subjected only to a small amount of pivoting, and
- in a second phase subsequent to the first phase to the pivoting of the metering flap (12) in order to modify the cross section for the passage of fluid along the first path (2) without the position of the routing flap (10) being modified,
the valve being **characterized in that** the actuating device (15) is configured so that rotation of the actuating wheel (16) while the actuating device (15) is in the first configuration causes the metering flap (12) to pivot in just one single same direction of rotation regardless of the direction of rotation of the actuating wheel (16).

2. Valve according to Claim 1, the actuating device (15) being configured so that rotation of the actuating wheel (16) while the actuating device (15) is in the first configuration leads:
- in a first direction of rotation to the pivoting of the routing flap (10) into the position in which the second path (9) is shut off, and
- in a second direction of rotation to the pivoting of the routing flap (10) into the position in which the third path (11) is shut off.

3. Valve according to either one of Claims 1 and 2, the actuating device (15) being able to keep the routing flap (10) in one or other of the positions in which either the second (9) or third (11) path is shut off while the actuating wheel (16) continues a one-way rotational movement from the first configuration.

4. Valve according to any one of the preceding claims, the actuating device (15) comprising a system for actuating the routing flap, the said actuating system comprising a guide piece (32) and an interface piece (26), the actuating wheel (16) being rigidly coupled to the guide piece (32) and the routing flap (10) being rigidly coupled to the interface piece (26), the guide piece (32) collaborating with the interface piece (26) in order to cause the routing flap (10) to pivot.

5. Valve according to any one of the preceding claims, the actuating device (15) comprising an actuating system for actuating the metering flap (12), the said actuating system comprising a guide member (24, 22) and an interface piece (21), the actuating wheel (16) being connected to the guide member (24) in such a way as to cause the latter to pivot as it rotates, and the interface piece (21) being rigidly coupled to the metering flap (12) and the guide member (22) collaborating with the interface piece (21) to cause the metering flap (12) to pivot.

6. Valve according to Claims 4 and 5, the guide member (22, 24) of the system for actuating the metering flap (12) comprising a first lever (24) and a second lever (22) which are articulated in terms of rotation relative to one another via a common end, the first lever (24) comprising another end collaborating via a first pivot point with the actuating wheel (16) and the second lever (22) comprising another end collaborating via a second pivot point with the interface piece (21) of the system for actuating the metering flap (12).

7. Valve according to Claim 6, the actuating wheel (16) collaborating with the guide piece (32) of the system for actuating the routing flap (10) via a first zone of the said wheel and the actuating wheel (16) facing the common end of the first (24) and second (22) levers of the guide member (22, 24) of the system for actuating the metering flap (12) via a second zone of the said wheel which is different from the first zone.

8. Valve according to either one of Claims 6 and 7, the common end of the first (24) and second (22) levers, the first pivot point and the second pivot point being aligned when the actuating device (15) is in the first configuration.

9. Valve according to either one of Claims 4 and 6, the interface piece (26) of the system for actuating the routing flap (10) being configured to define a guide pathway for the guide piece (32) with which it collaborates.

10. Valve according to Claim 9, the guide pathway being formed by a blind groove (28) formed in the said interface piece (26), the said guide piece (32) resting in the blind groove (28) when the routing flap (10) is in the intermediate position.

11. Valve according to Claim 10, the said guide piece (32) when resting in the groove (28) and under the effect of a rotation of the actuating wheel (16) applying thrust to the said interface piece (26) in order to cause the routing flap (10) to pivot.

12. Valve according to any one of Claims 9 to 11, the system for actuating the routing flap (10) comprising a retaining piece (33) for retaining the interface piece (26) of the said actuating system, the said retaining piece (33) being rigidly coupled to the actuating wheel (16).

13. Valve according to Claim 12, the said retaining piece (33) and the said interface piece (26) comprising complementary surfaces so that collaboration between these complementary surfaces keeps the said interface piece (26) in position as the said guide piece (32) moves while the routing flap (10) is in one or other of the shutting-off positions.

14. Engine control valve according to any one of Claims 1 to 13 placed in an exhaust gas recirculation loop comprising a cooler (8) and a bypass duct (9) bypassing the said cooler (8), and the metering flap (12) regulating the flow of gas through the said exhaust gas recirculation loop, the routing flap (10) closing off either a path (11) providing access to the said cooler (8) or the said bypass duct (9).
